# EUROPÄISCHE PATENTANMELDUNG

(11) **EP 1 137 285 A1**
(43) Veröffentlichungstag der Anmeldung: **26.09.2001**
(21) Anmeldenummer: 01103853.6
(22) Anmeldetag: 16.02.2001
(51) Int. Cl.: H04N 7/18

(54) **Fernsteuerbare Kamera und Verfahren zu ihrem Betrieb**

(30) Priorität: 03.03.2000 DE 10010590
(71) Anmelder: Sahin, Nedret, 74072 Heilbronn (DE)
(72) Erfinder: Sahin, Nedret, 74072 Heilbronn (DE)
(74) Vertreter: Gleiss, Alf-Olav, Dr.jur. Dipl.-Ing.

(57) **Zusammenfassung**

Die Erfindung betrifft ein Verfahren zum Betreiben einer fernsteuerbaren Kamera, bei dem Fernsteuerdaten von einer Fernsteuereinrichtung und Bilddaten von der Kamera an eine Bilddarstellungseinrichtung übermittelt werden. Das Verfahren zeichnet sich dadurch aus, dass die Fernsteuer- und Bilddaten über ein Computer-Netzwerk (10) übermittelt werden und dass die Kamera (2) ferngesteuert verschwenkt wird und/oder dass der Bilderfassungsausschnitt der Kamera (2) ferngesteuert verändert wird.

## Beschreibung

Die Erfindung betrifft ein Verfahren zum Betreiben einer fernsteuerbaren Kamera, gemäß Oberbegriff des Anspruchs 1 sowie eine fernsteuerbare Kamera mit den Merkmalen des Oberbegriffs des Anspruchs 12.

Aus der DE 198 08 616 A1 ist ein Verfahren zum Betreiben einer fernsteuerbaren Kamera bekannt. Die Übermittlung der Fernsteuerdaten erfolgt zunächst über das Internet zu einem Internetserver, der dann eine Wählleitungsverbindung über ein öffentliches Kommunikationsnetz zur Kamera aufbaut. Die Fernsteuerung der Kamera ist bei diesem bekannten Verfahren auf das Ein- und Ausschalten der Kamera beziehungsweise eines der Kamera vorgeschalteten Modems beschränkt.

Nachteilig bei diesem Verfahren ist, dass für die Datenübertragung in der Datenstrecke eine Vielzahl von Geräten notwendig sind, um die Kamera ansprechen zu können. Außerdem fallen neben den Verbindungskosten im Internet weitere Kosten für die Wählleitungsverbindung an, an die die Kameras über das Modem angeschlossen sind. Ferner ist nachteilig, dass der die Kameras ansteuernde Personal-Computer sehr nahe an den Kameras aufgestellt werden muss, um die Wählleitungsverbindung relativ kurz, also beispielsweise als Ortnetzverbindung, herzustellen, damit die Kosten für die Wählleitungsverbindung einigermaßen niedrig gehalten werden können. Werden somit an unterschiedlichen Orten Kameras benötigt, muss jeweils ein entsprechender Personal-Computer in der Nähe der Kameras aufgestellt werden.

Es ist daher Aufgabe der Erfindung, ein Verfahren zum Betreiben einer fernsteuerbaren Kamera und eine fernsteuerbare Kamera anzugeben, bei dem/der hinsichtlich der Datenübertragung eine hohe Flexibilität besteht und bei dem/der geringe Kosten für die Datenübertragung anfallen.

Gelöst wird diese Aufgabe mit einem Verfahren zum Betreiben einer fernsteuerbaren Kamera, das die im Anspruch 1 genannten Merkmale aufweist. Bei diesem Verfahren werden die Fernsteuerdaten von einer Fernsteuereinrichtung und Bilddaten von der Kamera an eine Bilddarstellungseinrichtung übermittelt. Das Verfahren zeichnet sich dadurch aus, dass die Fernsteuer- und Bilddaten mittels eines Computer-Netzwerks übermittelt werden, so dass in vorteilhafter Weise auf die separate Wählleitungsverbindung verzichtet werden kann. Die Datenübertragung, also sowohl die Übertragung der Fernsteuerdaten als auch die der Bilddaten, erfolgt ausschließlich über ein Computer-Netzwerk und nicht über das öffentliche Telefonnetz. Als Computer-Netzwerk kann ein Fernnetz, also beispielsweise das Internet, oder ein lokales Netzwerk (LAN) dienen. Erfindungsgemäß ist ferner vorgesehen, dass die Kamera ferngesteuert verschwenkt und/oder dass der Bilderfassungsausschnitt der Kamera ferngesteuert verändert wird. Somit ist es mit einer einzigen Kamera möglich, einen sehr großen Raum zu überwachen. Außerdem ist es möglich, über den veränderbaren Erfassungsausschnitt, also das Zoomen, ein Objekt sehr detailgenau oder eine Vielzahl von Objekten in einem gröberen Raster aufzustellen. Dadurch, dass die Datenübertragung ausschließlich über das Computer-Netzwerk erfolgt, sind außerdem die Kosten für die Datenübertragungsverbindung gegenüber einer herkömmlichen Telefonverbindung relativ gering.

Bei einem bevorzugten Ausführungsbeispiel liefert die Kamera digitale Bilddaten, die über das Computer-Netzwerk übermittelt werden können. Alternativ kann auch eine analog arbeitende Kamera eingesetzt werden, wobei jedoch deren analoge Bilddaten einem Analog-/Digital-Wandler zugeführt werden, so dass auch hier digitale Bilddaten über das Computer-Netzwerk übertragen werden können.

Bei einem besonders bevorzugten Ausführungsbeispiel ist vorgesehen, dass die Bilddaten vor der Übermittlung an die Bilddarstellungseinrichtung komprimiert werden. Damit wird sichergestellt, dass die zu übertragende Datenmenge reduziert ist. Es können somit pro Zeiteinheit eine hohe Anzahl von Einzelbildern übermittelt werden, so dass an der Bilddarstellungseinrichtung ein von der Kamera aufgenommener Bewegungsablauf sehr naturgetreu dargestellt werden kann. Für die Komprimierung der Bilddaten kann das an sich bekannte Wavelet-Verfahren angewandt werden.

Nach einer Weiterbildung der Erfindung ist vorgesehen, dass zusätzlich zu den Bilddaten eine Bilddarstellungssoftware und/oder eine Bilddaten-Dekomprimierungssoftware an die Bilddarstellungseinrichtung übertragen werden. Dadurch ist es in besonders vorteilhafter Weise möglich, von einem beliebigen Ort mit Zugang zu dem Computer-Netzwerk Bilder von der fernsteuerbaren Kamera zu erhalten, da an der Bilddarstellungseinrichtung -außer der Netzwerk-Software- keine separate Software für die Bilddarstellung und die Dekomprimierung benötigt werden. Für das Dekomprimieren kann das vorstehend erwähnte Wavelet-Verfahren verwendet werden.

Besonders bevorzugt wird die Bilddarstellungs- und Dekomprimierungssoftware als JAVA-Aplett dargestellt, das zusammen mit den Bilddaten übermittelt wird. Erst wenn dieses JAVA-Aplett an der Bilddarstellungseinrichtung empfangen wird, wird dieses in der Bilddarstellungseinrichtung zur Ausführung gebracht, so dass zunächst die Einzelbilder dekomprimiert und dann dargestellt werden.

Bevorzugt wird ein Ausführungsbeispiel der Erfindung, bei dem von der Kamera Einzelbilder übermittelt werden, die in der Bilddarstellungseinrichtung als Videosequenz zusammengefügt werden. Somit kann an der Bilddarstellungseinrichtung eine genaue Widergabe eines Bewegungsablaufes dargestellt werden.

Bei einem Ausführungsbeispiel ist vorgesehen, dass pro Zeiteinheit die Anzahl der zu übermittelnden Einzelbilder über die Fernsteuereinrichtung vorgebbar ist. Wird eine geringere Anzahl von Einzelbildern gewählt, kann die Schärfe der Bilder entsprechend hoch gewählt werden, also pro Einzelbild eine relativ hohe Datenmenge übertragen werden. Wird die Anzahl der Einzelbilder jedoch erhöht, kann zwar eine naturgetreue Wiedergabe an der Bilddarstellungseinrichtung erfolgen, wobei jedoch pro Einzelbild eine geringere Datenmenge übertragen wird.

Ein besonders bevorzugtes Ausführungsbeispiel zeichnet sich dadurch aus, dass über die Fernsteuereinrichtung ein Schwenkverlauf der Kamera und/oder die Größe des Bilderfassungsausschnitts als Bewegungsabfolge an die Kamera übertragen wird. Das heißt, über die Fernsteuereinrichtung wird festgelegt, in welchem Schwenkwinkel die Kamera bewegt werden soll, wie schnell die Kamera diesen Schwenkwinkelbereich durchläuft und an welchem Schwenkwinkel eine bestimmte Größe des Bilderfassungsausschnittes eingestellt werden soll, also an welchem Schwenkwinkel das Objektiv der Kamera eine entsprechende Zoom-Einstellung besitzen soll. Diese Bewegungsabfolge kann in der Kamera gespeichert werden, so dass sie mehrfach wiederholt werden kann. Beispielsweise könnte hierfür vorgesehen sein, dass die Bewegungsabfolge zu bestimmten Zeitpunkten wiederholt wird.

Die Aufgabe wird auch mit einer fernsteuerbaren Kamera gelöst, die die Merkmale des Anspruchs 12 besitzt. Die fernsteuerbare Kamera ist mittels einer Schwenkeinrichtung fernsteuerbar schwenkbar. Außerdem besitzt sie ein Objektiv mit veränderbarem Bilderfassungsausschnitt, also ein sogenanntes Zoom-Objektiv. Ferner ist die Kamera mit einer Schnittstelle für das Empfangen von Fernsteuerdaten und das Senden von Bilddaten ausgestattet. Erfindungsgemäß zeichnet sich die fernsteuerbare Kamera dadurch aus, dass die Schnittstelle als Computer-Netzwerkschnittstelle ausgebildet ist, so dass es möglich ist, über ein Computer-Netzwerk sowohl Fernsteuerdaten zu erhalten als auch die Bilddaten an eine Bilddarstellungseinrichtung zu übermitteln. Insbesondere ist diese fernsteuerbare Kamera für die Durchführung des vorstehend beschriebenen Verfahrens vorgesehen.

Eine bevorzugte Ausführungsform der Kamera zeichnet sich dadurch aus, dass sie eine Datenverarbeitungseinrichtung für die Fernsteuer- und Bilddaten aufweist. Vorzugsweise ist hierzu vorgesehen, dass die fernsteuerbare Kamera mit einem Personal-Computer gekoppelt ist, der den Netzwerk-Zugang, also die Schnittstelle, aufweist.

Die Netzwerkschnittstelle kann eine ISDN-Karte oder eine Netzwerkkarte für ein lokales Netzwerk oder ein Fernnetzwerk, insbesondere das Internet, sein.

Weitere Ausgestaltungen ergeben sich aus den Unteransprüchen.

Die Erfindung wird nachfolgend anhand von Ausführungsbeispielen mit Bezug auf die Zeichnung näher erläutert. Es zeigen:
- Figur 1: eine Einrichtung zur Fernsteuerung einer fernsteuerbaren Kamera,
- Figur 2: ein Flussdiagramm, das die Übertragung der Fernsteuerdaten an die Kamera zeigt und
- Figur 3: ein Flussdiagramm, das die Übertragung der Bilddaten von der Kamera zu einer Fernsteuereinrichtung zeigt.

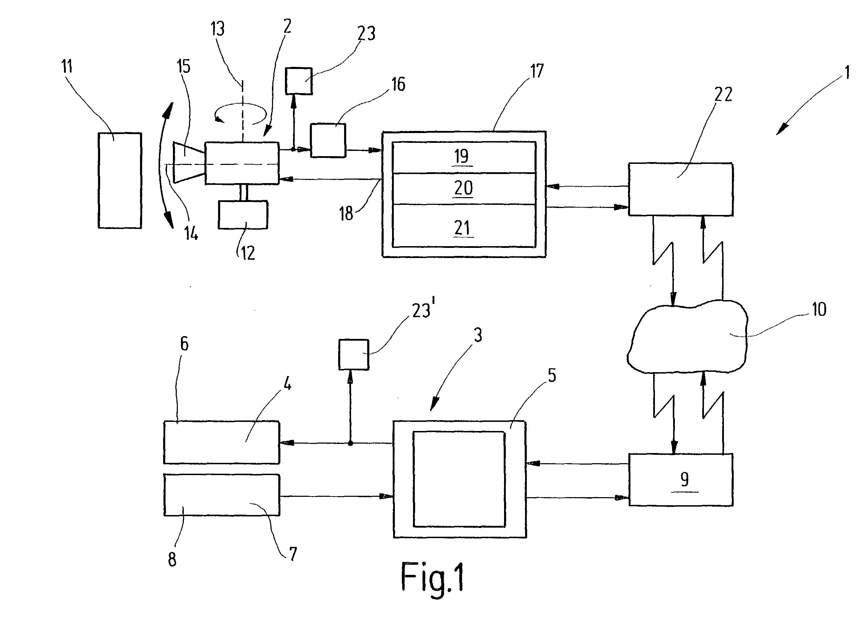

Figur 1 zeigt eine Einrichtung 1 zur Fernsteuerung einer fernsteuerbaren Kamera 2. Die Einrichtung 1 umfasst eine Fernsteuereinrichtung 3 und eine Bilddarstellungseinrichtung 4. Die Fernsteuereinrichtung 3 ist insbesondere als Personal-Computer 5 realisiert, dessen Monitor 6 die Bilddarstellungseinrichtung 4 bildet. Die Fernsteuereinrichtung 3 umfasst ferner eine Eingabeeinrichtung 7 für die Fernsteuerbefehle, die an die Kamera 2 zu übermitteln sind. Die Eingabeeinrichtung 7 kann die Tastatur 8 des Personal-Computers 5 sein. Sie kann aber auch als Maus oder Joystick realisiert sein. Die Fernsteuerbefehle werden an der Eingabeeinrichtung 7 eingegeben und an die Fernsteuereinrichtung 3 übermittelt. Die von der Kamera 2 empfangenen Bilddaten werden von der Fernsteuereinrichtung 3 an die Bilddarstellungseinrichtung 4 übermittelt und dort entsprechend dargestellt.

Die Fernsteuereinrichtung 3 besitzt eine Netzwerk-Schnittstelle 9, über die die Fernsteuereinrichtung 3 an ein Computer-Netzwerk 10 angebunden ist, welches als lokales Netzwerk oder als Fernnetzwerk, insbesondere das Internet, realisiert sein kann.

An das Computer-Netzwerk 10 ist ebenfalls die Kamera 2 angebunden, die ein zu überwachendes Objekt 11 erfassen soll. Hierfür ist vorgesehen, dass die Kamera 2 mittels einer Schwenkeinrichtung 12 um zumindest eine Achse 13 oder 14 schwenkbar ist. Vorzugsweise ist die Kamera 2 um eine vertikale Achse 13 drehbar und um eine horizontale Achse 14 schwenkbar.

Das Objektiv 15 der Kamera 2 ist in bevorzugter Ausführungsform als Zoom-Objektiv ausgebildet, um die Größe des Bilderfassungsausschnitts zu verändern beziehungsweise um das Objekt 11 mehr oder weniger detailgetreu aufnehmen zu können. Die Kamera 2 liefert ausgangsseitig vorzugsweise ein digitales Signal der aufgenommenen Bilder. Hierfür kann vorgesehen sein, dass die Kamera zwar eine analoge Aufzeichnung der Bilder vornimmt, die analogen Signale jedoch über einen hier nicht dargestellten Analog-/Digital-Wandler entsprechend umgewandelt werden, so dass in jedem Fall ausgangsseitig digitale Bilddaten zur Verfügung stehen. Alternativ ist es jedoch auch möglich, einen separaten A-/D-Wandler einzusetzen.

Für die Übermittlung der von der Kamera 2 aufgezeichneten Bilder ist diese in bevorzugter Ausführungsform über eine Videokarte 16 an einen Videoserver 17 angeschlossen, der insbesondere als Personal-Computer ausgebildet sein kann. Über eine parallele oder serielle Schnittstelle 18 des Videoservers 17 können die Fernsteuerdaten an die Kamera 2 beziehungsweise an die Schwenkeinrichtung 12 übermittelt werden.

Empfängt der Videoserver 17 über die Videokarte 16 Bilddaten, so werden in dem Videoserver 17 aus dem Bilddatensignal Einzelbilder generiert, die in einer Komprimierungseinrichtung 19 unter Zuhilfenahme eines geeigneten Algorithmus' komprimiert werden. Die komprimierten Bilder werden im Arbeitsspeicher 20 des Videoservers 17 abgelegt. In einer Ausgangseinrichtung 21 werden die komprimierten Bilder zur Versendung vorbereitet, also beispielsweise als serieller Datenstrom an eine Netzwerk-Schnittstelle 22 übermittelt, die diesen Datenstrom dann über das Computer-Netzwerk 10 zu der Fernsteuereinrichtung 3 und schließlich zu der Bilddarstellungseinrichtung 4 übermittelt.

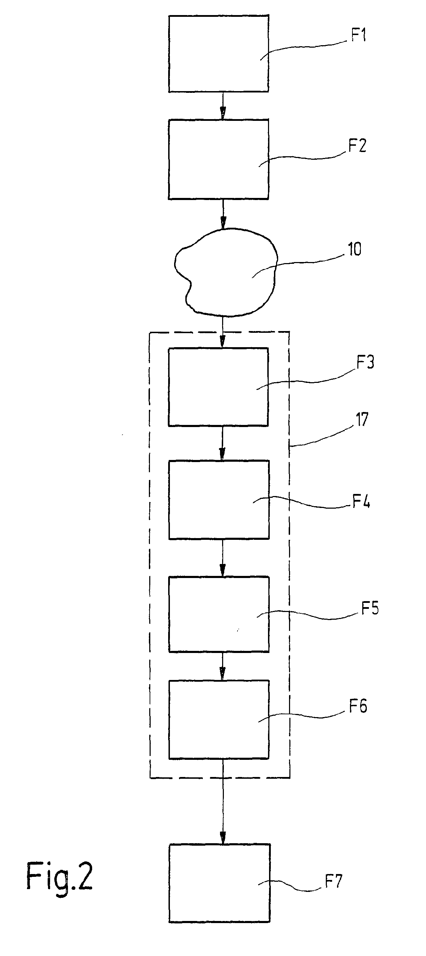

Anhand von Figur 2 wird im Folgenden die Fernsteuerung der Kamera über das Computer-Netzwerk 10 näher erläutert: Die über die Eingabeeinrichtung 7 eingegebenen Positionierungsbefehle für die Kamera 2 werden als Positionierinformationen in einem ersten Schritt F1 in der Fernsteuereinrichtung 3 zwischengespeichert. In einem zweiten Verfahrensschritt F2 werden die Positionierungsinformationen, also die Fernsteuerbefehle, über die Netzwerk-Schnittstelle 9, die von einem Modem, einer ISDN-Karte oder einer Netzwerkkarte gebildet sein kann, an das Computer-Netzwerk 10 übermittelt. Von dem Netzwerk 10 gehen die Fernsteuerbefehle an den Videoserver 17. Der Videoserver 17 beziehungsweise die Kamera 2 kann jedoch auch über eine sogenannte PTP-Verbindung (Point-To-Point-Verbindung) angesprochen werden. Dabei erfolgt eine Einwahl der Fernsteuereinrichtung 3 direkt zu dem Videoserver 17 beziehungsweise der Kamera 2. Auf dem Videoserver 17 werden die Positionierungsinformationen vom Netzwerk 10 downgeloaded und vorzugsweise in einer Datei gespeichert (Verfahrensschritt F3). In einem weiteren Verfahrensschritt F4 wird der Inhalt dieser Datei ausgelesen und in einem Schritt F5 aus diesen Informationen Steuerbefehle beziehungsweise Steuersignale generiert, die über die Schnittstelle 18 in einem Verfahrensschritt F6 an die Kamera 2 übertragen werden. In einem Verfahrensschritt F7 nimmt die Kamera die Steuersignale entgegen und positioniert sich entsprechend neu, das heißt, dass die Schwenkeinrichtung 12 und/oder das Objektiv 15 betätigt werden.

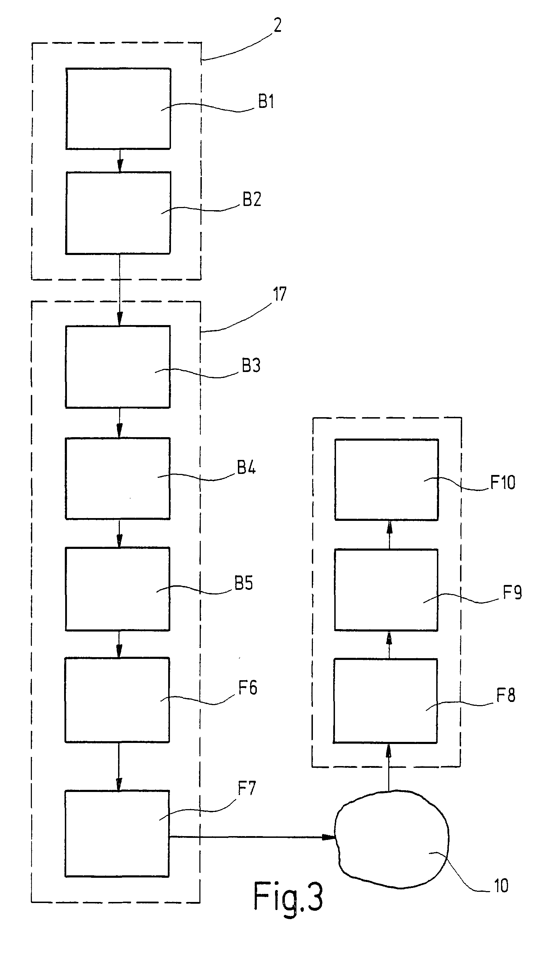

Im Folgenden wird anhand des in Figur 3 dargestellten Flussdiagramms die Übertragung der Bilddaten von der Kamera 2 zu der Fensteuereinrichtung 3 näher erläutert: Gemäß ihrer nun vorliegenden Schwenkstellung beziehungsweise in Abhängigkeit der Zoom-Stellung des Objektivs 15 ermittelt die Kamera 2 Bilder, die in ihr aufgezeichnet und in einem Verfahrensschritt Bl in ein Videosignal umgewandelt werden, das über eine geeignete Kabelverbindung in einem Verfahrensschritt B2 über die Videokarte 16 zu dem Videoserver 17 übermittelt wird. Im Videoserver 17 werden aus dem Videosignal in einem Verfahrensschritt B3 Einzelbilder erzeugt, wobei die Anzahl der Einzelbilder über die Fernsteuereinrichtung 3 beziehungsweise die Eingabeeinrichtung 7 festgelegt und zusammen mit den Fernsteuerbefehlen übermittelt werden kann. In einem Verfahrensschritt B4 werden die Einzelbilder unter Zuhilfenahme eines Algorithmus' komprimiert, also in der Komprimierungseinrichtung 19 entsprechend bearbeitet. Die Komprimierungsrate, also die Datenreduzierung, kann in der Komprimierungseinrichtung 19 eingestellt werden. Die Komprimierungsrate kann gegebenenfalls über die Fernsteuereinrichtung 3 vorgegeben werden.

In dem Arbeitsspeicher 20 des Videoservers 17 werden die komprimierten Bilder beziehungsweise Daten in einem Verfahrensschritt B5 gesichert beziehungsweise abgespeichert und in einem Verfahrensschritt F6 in der Ausgangseinrichtung 21 entsprechend zur Versendung über das Netzwerk 10 vorbereitet. In einem Verfahrensschritt F7 werden die Daten dann über die Netzwerk-Schnittstelle 22, die als Netzwerk- oder ISDN-Karte oder als Modem ausgebildet sein kann, an das Computer-Netzwerk 10 übertragen, wobei die Bilddaten von der Netzwerk-Schnittstelle 22 mit einer entsprechenden Adresse an das Netzwerk 10 übergeben werden. Diese Adresse kann vorzugsweise zusammen mit den Fernsteuerbefehlen von der Fernsteuereinrichtung 3 zuvor an den Videoserver 17 übermittelt worden sein. Entsprechend der ausgewählten Adresse werden die Bilddaten im Computer-Netzwerk 10 an der entsprechenden Webside zur Verfügung gestellt, so dass sie in einem Verfahrensschritt F8 von der Fernsteuereinrichtung 3 heruntergeladen werden können. In einem Verfahrensschritt F9 werden die einzelnen Bilder dann dekomprimiert und in einem Verfahrensschritt F10 auf der Bilddarstellungseinrichtung 4 wiedergegeben.

Bevorzugt werden die Bilddaten von der Kamera 2 zusammen mit einer Bilddarstellungssoftware und einer Dekomprimierungssoftware an die Fernsteuereinrichtung beziehungsweise Bilddarstellungseinrichtung 4 übertragen, so dass in dem Verfahrensschritt F8 zunächst diese Software abgearbeitet wird, um die Bilddaten entsprechend zu dekomprimieren und auf der Bilddarstellungseinrichtung 4 darstellen zu können. Vorzugsweise ist diese Software als JAVA-Aplett bereitgestellt, das nach dem Herunterladen in die Fernsteuereinrichtung 3 in einem Speicher der Fernsteuereinrichtung 3 entpackt und abgearbeitet wird, wodurch schließlich die Bilddarstellungssoftware und Dekomprimierungssoftware zur Ausführung gebracht werden.

Dadurch, dass die Bilddaten bei der Übertragung komprimiert sind, ist es möglich, zumindest fünf bis sechs Einzelbilder pro Sekunde an der Bilddarstellungseinrichtung 4 darzustellen. Somit ist bereits eine natürliche Wiedergabe von Bewegungsabläufen darstellbar. Durch die entsprechend wählbare Komprimierungsrate beziehungsweise durch spezielle Komprimierungsalgorithmen kann die Bildanzahl pro Sekunde noch gesteigert werden, so dass eine Bildwiedergabe in Videoqualität als Videosequenz darstellbar ist, also circa zwanzig Bilder pro Sekunde, was einen Bewegungsablauf sehr naturgetreu darstellt.

Mit dem erfindungsgemäßen Verfahren ist es also möglich, ein Videosignal mittels der Kamera 2 aufzunehmen, zur Komprimierung vorzubereiten und über das Computer-Netzwerk 10 zu übermitteln. Wenn nun empfängerseitig, also an der Fernsteuereinrichtung 3 beziehungsweise Bilddarstellungseinrichtung 4, auf eine in bevorzugter Ausführungsform von einem Service-Provider eingerichtete Website mit einem in der Fernsteuereinrichtung 3 abgelegten gängigen Webbrowser zugegriffen wird, ist es ohne weitere Zusatzsoftware möglich, an der Bilddarstellungseinrichtung 4 das von der Kamera 2 aufgenommene Geschehen zu beobachten und interaktiv einzugreifen, das heißt, die Kameraposition und/oder die Zoom-Einstellung des Objektivs 15 über das Computer-Netzwerk zu bestimmen. Fernsteuerseitig kommt man also ohne Zusatzsoftware aus, das heißt, dass die für die Dekomprimierung und Bilddarstellung notwendige Software bereits zusammen mit den Bilddaten übermittelt wurde.

Gemäß einem weiteren Ausführungsbeispiel können die von der Kamera 2 aufgezeichneten Bilder auch an einem handelsüblichen Videorecorder mitgeschnitten werden. Ein derartiger Videorecorder 23 kann beispielsweise am Aufstellungsort der Kamera vorgesehen sein. Alternativ oder zusätzlich kann ein derartiger Recorder 23' auch am Aufstellungsort der Fernsteuereinrichtung 3 aufgestellt sein.

## Patentansprüche

1. Verfahren zum Betreiben einer fernsteuerbaren Kamera, bei dem Fernsteuerdaten von einer Fernsteuereinrichtung und Bilddaten von der Kamera an eine Bilddarstellungseinrichtung übermittelt werden, **dadurch gekennzeichnet, dass** die Fernsteuer- und Bilddaten über ein Computer-Netzwerk (10) übermittelt werden und dass die Kamera (2) ferngesteuert verschwenkt wird und/oder dass der Bilderfassungsausschnitt der Kamera (2) ferngesteuert verändert wird.

2. Verfahren nach Anspruch 1, **dadurch gekennzeichnet, dass** das Computer-Netzwerk (10) das Internet ist.

3. Verfahren nach Anspruch 1, **dadurch gekennzeichnet, dass** das Computer-Netzwerk (10) ein lokales Netzwerk ist.

4. Verfahren nach Anspruch 1, **dadurch gekennzeichnet, dass** die Kamera (2) digitale Bilddaten liefert.

5. Verfahren nach Anspruch 1 oder 4, **dadurch gekennzeichnet, dass** die Kamera (2) analoge Bilddaten liefert, die einem Analog-/Digital-Wandler zugeführt werden.

6. Verfahren nach einem der vorhergehenden Ansprüche, **dadurch gekennzeichnet, dass** die Bilddaten vor der Übermittlung an die Bilddarstellungseinrichtung (4) komprimiert werden.

7. Verfahren nach einem der vorhergehenden Ansprüche, **dadurch gekennzeichnet, dass** zusätzlich zu den Bilddaten eine Bilddarstellungssoftware und/oder eine Dekomprimierungssoftware an die Bilddarstellungseinrichtung (4) beziehungsweise Fernsteuereinrichtung (3) übermittelt werden.

8. Verfahren nach Anspruch 7, **dadurch gekennzeichnet, dass** ein JAVA-Aplett als Software verwendet wird.

9. Verfahren nach einem der vorhergehenden Ansprüche, **dadurch gekennzeichnet, dass** von der Kamera (2) Einzelbilder übermittelt werden, die in der Bilddarstellungseinrichtung (4) als Videosequenz zusammengefügt werden.

10. Verfahren nach einem der vorhergehenden Ansprüche, **dadurch gekennzeichnet, dass** pro Zeiteinheit die Anzahl der zu übermittelnden Einzelbilder über die Fernsteuereinrichtung (4) vorgebbar ist.

11. Verfahren nach einem der vorhergehenden Ansprüche, **dadurch gekennzeichnet, dass** über die Fernsteuereinrichtung (3) ein Schwenkverlauf der Kamera (2) und/oder die Größe des Bilderfassungsausschnitts als, vorzugsweise wiederholbare, Bewegungsabfolge an die Kamera (2) übertragen wird.

12. Fernsteuerbare Kamera, die mittels einer Schwenkeinrichtung (12) fernsteuerbar schwenkbar ist und die ein Objektiv (15) mit veränderbarem Bilderfassungsausschnitt aufweist, mit einer Schnittstelle für das Empfangen von Fernsteuerdaten und das Senden von Bilddaten, **dadurch gekennzeichnet, dass** die Schnittstelle als Computer-Netzwerkschnittstelle (22) ausgebildet ist.

13. Fernsteuerbare Kamera, **gekennzeichnet durch** eine Datenverarbeitungseinrichtung (5) für die Fernsteuer- und Bilddaten.

14. Fernsteuerbare Kamera nach Anspruch 12, **dadurch gekennzeichnet, dass** die Netzwerkschnittstelle (22) eine ISDN-Karte oder eine Netzwerkkarte für ein lokales Netzwerk oder ein Fernnetzwerk, insbesondere das Internet, ist.
